# FASCICULE DE BREVET EUROPEEN

(11) **EP 0 914 267 B1**
(45) Date de publication et mention de la délivrance du brevet: **07.11.2001**
(21) Numéro de dépôt: 98925770.4
(22) Date de dépôt: 22.05.1998
(51) Int. Cl.: B60R 19/18, B29C 43/18

(54) **POUTRE DE PARE-CHOCS ET SON PROCEDE DE REALISATION**
STOSSFÄNGER- TRAGKÖRPER UND SEIN HERSTELLUNGSVERFAHREN
FENDER BEAM AND METHOD FOR MAKING SAME

(30) Priorité: 23.05.1997 FR 9706335
(43) Date de publication de la demande: 12.05.1999
(73) Titulaire: COMPAGNIE PLASTIC OMNIUM, 69007 Lyon (FR)
(72) Inventeur: UYTTERHAEGHE, Luc, F-01100 Arbent (FR); CORDEBAR, Francis, F-01100 Oyonnax (FR); CORNET, Olivier, F-52200 Langres (FR)
(74) Mandataire: Leszczynski, André
(86) Numéro de dépôt international: FR9801031
(87) Numéro de publication internationale: WO9852793

(56) Documents cités:
- FR-A- 2 749 535
- US-A- 4 749 613
- PATENT ABSTRACTS OF JAPAN vol. 016, no. 538 (M-1335), 9 novembre 1992 & JP 04 201753 A (NIHON JII II PURASUCHITSUKUSU KK), 22 juillet 1992
- PATENT ABSTRACTS OF JAPAN vol. 016, no. 549 (M-1338), 18 novembre 1992 & JP 04 208417 A (NIPPON STEEL CORP ET AL.), 30 juillet 1992
- "PLASTIQUES ET MATERIAUX MOUVEAUX EN AUTOMOBILE: ALLIER ECONOMIE ET SOLUTIONS ORIGINALES" INGENIEURS DE L'AUTOMOBILE, no. 711, mars 1997, pages 24-30, XP000687638

## Description

La présente invention concerne une poutre de pare-chocs, et son procédé de réalisation.

On sait que certains types de pare-chocs de véhicules automobiles comprennent un bouclier ou peau extérieure, une poutre qui assure la tenue mécanique du pare-chocs et éventuellement des absorbeurs locaux intercalés entre la poutre et les longerons du véhicule pour absorber l'énergie d'un choc.

Une poutre selon le préambule de la revendication 1 et un procédé selon le préambule de la revendication 3 sont connus du document JP-A-4201753.

Tant la poutre que les absorbeurs locaux sont connus pour être relativement coûteux à réaliser, ce qui pose un problème en cas de réparation d'un véhicule accidenté.

La présente invention vise à résoudre ces inconvénients en proposant une poutre de pare-chocs d'un type nouveau.

La présente invention a pour objet une poutre de pare-chocs obtenue par moulage d'une matière thermoplastique moulable et d'une matière thermoplastique drapable à fibres continues.

Cette poutre se caractérise par le fait qu'elle présente, en section transversale, une longueur développée constante.

Cette caractéristique permet d'utiliser une plaque rectangulaire de matière thermoplastique à fibres continues pour mouler la poutre, la largeur de la plaque correspondant à la longueur développée de la section transversale de la poutre.

Dans la présente description, on entend par moulable l'aptitude qu'a la matière thermoplastique à fluer dans un moule en remplissant toutes ses cavités, quelle que soit leur profondeur, et l'on entend par matière thermoplastique drapable une matière thermoplastique se présentant sous forme de nappe textile préconsolidée ou non qui, lors d'un moulage, peut seulement se déformer mais conserve sensiblement son épaisseur initiale.

Comme matière thermoplastique drapable à fibres continues, on peut utiliser des préimprégnés thermoplastiques de type "Twintex" de la société Vetrotex ou "Tepex" de la société Du Pont de Nemours.

Dans un mode de réalisation particulier, la poutre comporte des surépaisseurs de matière thermoplastique à fibres continues.

La présente invention a également pour objet un procédé pour réaliser une poutre telle que décrite ci-dessus.

Ce procédé se caractérise par le fait qu'il consiste à définir un moule de telle sorte que la section transversale de son empreinte présente une longueur développée sensiblement constante, à placer une plaque rectangulaire d'une matière thermoplastique drapable à fibres continues dans le moule ouvert et à apporter de la matière thermoplastique moulable dans le moule pour mouler la poutre.

Selon l'invention, on peut apporter la matière plastique par injection, par injection-compression, ou par extrusion-compression.

Dans une variante préférée de ce mode de réalisation, particulièrement adaptée aux techniques d'injection-compression et d'extrusion-compression, on utilise un moule à plan de joint positif et l'on apporte la matière thermoplastique moulable dans le moule ouvert, par exemple par injection ou par extrusion, puis on ferme le moule pour comprimer les deux matières thermoplastiques et provoquer le remplissage de l'empreinte du moule.

Dans un mode de mise en oeuvre particulier de cette variante, on emprisonne des plaquettes de matière thermoplastique à fibres continues entre deux plaques rectangulaires de matière thermoplastique drapable, aux endroits de l'empreinte correspondant à des surépaisseurs de la poutre, et l'on dépose la matière thermoplastique à fort coefficient de fluage d'un côté de l'une des plaques rectangulaires opposé aux plaquettes, avant de refermer le moule.

Ainsi, on évite le déplacement des plaquettes dans le moule lors du fluage de la matière thermoplastique moulable.

Dans le but de mieux faire comprendre l'invention, on va en décrire maintenant un mode de réalisation donné à titre d'exemple non limitatif, en référence au dessin annexé dans lequel :

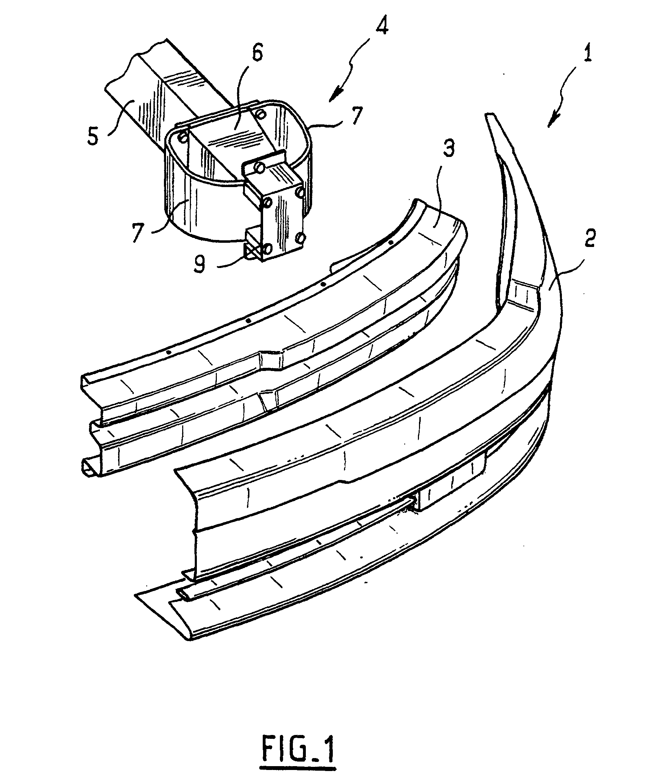

- la figure 1 est une vue en perspective d'une extrémité de pare-chocs en vue partiellement éclatée,
- la figure 2 est une vue en section transversale de la poutre du pare-chocs,
- la figure 3 représente le positionnement des plaques et plaquettes de matériau en fibres continues dans le moule lors de la réalisation de la poutre.

Dans le mode de réalisation représenté, le pare-chocs 1 comporte un bouclier 2, une poutre 3 et deux absorbeurs locaux 4 dont un seul est visible sur les figures.

Chaque absorbeur 4 est monté à l'extrémité d'un longeron 5 du véhicule et comporte un élément absorbant 6 à haut rendement, constitué par exemple par du polycarbonate extrudé en nid d'abeille se présentant sous la forme d'un tronc de pyramide à section rectangulaire.

L'absorbeur de chocs comporte également un organe élastique constitué par deux pièces en U 7 dont les extrémités sont distantes d'une longueur sensiblement égale à celle de l'élément absorbant.

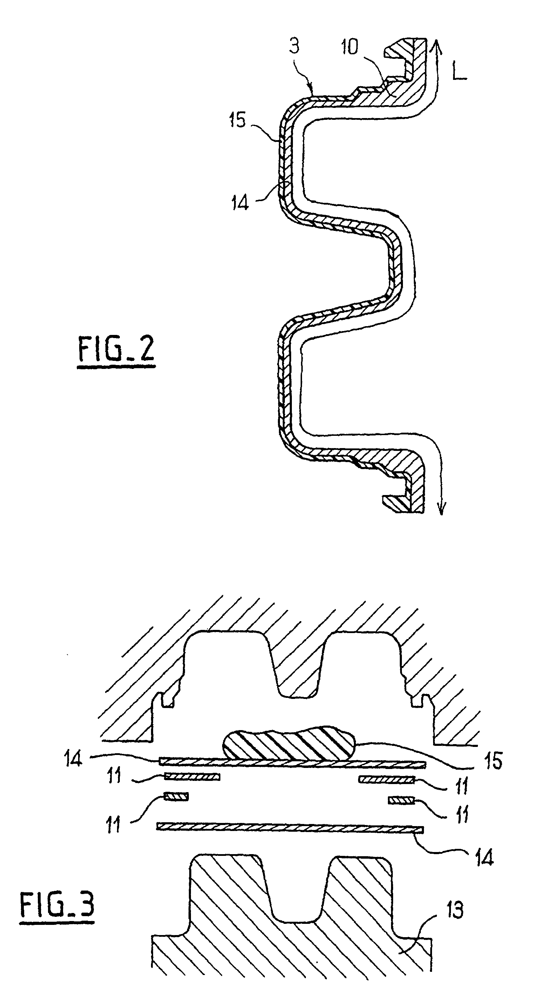

Sur la figure 2, on voit une section transversale de la poutre 3.

La longueur développée L de cette section est constante, quel que soit le plan de coupe considéré.

La poutre présente des surépaisseurs locales 10 qui sont obtenues par empilement de plaquettes 11 de matière thermoplastique drapable à fibres continues, judicieusement positionnées dans le moule 12, 13.

On voit, sur la figure 3, l'emplacement des plaquettes 11 dans le moule avant apport de la matière thermoplastique moulable 15 et fermeture du moule.

Les plaquettes 11 sont emprisonnées entre deux plaques rectangulaires 14 de matière thermoplastique drapable, qui comprennent de préférence des fibres continues, de manière que, lors de la fermeture du moule, le fluage de la matière thermoplastique 15 n'entraîne pas le déplacement des plaquettes 11 en des endroits inappropriés du moule.

Une fois le moulage réalisé, on obtient les surépaisseurs 10 visibles sur la figure 2.

Il est bien entendu que les modes de réalisation et de mise en oeuvre qui viennent d'être décrits ne présentent aucun caractère limitatif et qu'ils pourront recevoir toutes modifications désirables sans sortir pour cela du cadre de l'invention comme revendiquée.

## Revendications

1. Poutre de pare-chocs obtenue par moulage d'une matière thermoplastique moulable (15) et d'une matière thermoplastique drapable (14) à fibres continues se présentant sous forme de plaques, **caractérisée par le fait qu'**elle présente, en section transversale, une longueur développée constante, sur toute la longueur de la poutre.

2. Poutre selon la revendication 1, **caractérisée par le fait qu'**elle comporte des surépaisseurs (10) de matière thermoplastique à fibres continues.

3. Procédé pour réaliser une poutre selon l'une quelconque des revendications 1 et 2, **caractérisé par le fait qu'**il consiste à définir un moule (12,13) de telle sorte que la section transversale de son empreinte présente une longueur développée (L) sensiblement constante sur toute la longueur de l'empreinte, à placer une plaque rectangulaire (14) d'une matière thermoplastique drapable à fibres continues dans le moule ouvert et à apporter de la matière thermoplastique moulable (15) dans le moule pour mouler la poutre.

4. Procédé selon la revendication 3, **caractérisé par le fait que** l'on utilise un moule (12,13) à plan de joint positif et que l'on apporte la matière thermoplastique moulable (15) dans le moule ouvert, puis on ferme le moule pour comprimer les deux matières thermoplastiques (14,15) et provoquer le remplissage de l'empreinte du moule.

5. Procédé selon la revendication 4, **caractérisé par le fait que** l'on emprisonne des plaquettes (11) de matière thermoplastique drapable à fibres continues entre deux plaques rectangulaires (14) de matière thermoplastique drapable, aux endroits de l'empreinte correspondant à des surépaisseurs (10) de la poutre (3), et que l'on dépose la matière thermoplastique moulable (15) d'un côté de l'une des plaques rectangulaires (14) opposé aux plaquettes (11), avant de refermer le moule.

## Patentansprüche

1. Tragkörper für Stossfänger, der erhalten ist durch Giessformen eines formbaren thermoplastischen Materials (15) und eines streckziehbaren thermoplastischen Materials (14) mit kontinuierlichen Fasern, das in Form von Platten vorliegt, **dadurch gekennzeichnet, dass** der Tragkörper im Querschnitt gesehen über seine gesamte Länge eine konstante Abwicklungslänge aufweist.

2. Tragkörper nach Anspruch 1, **dadurch gekennzeichnet, dass** er Überdicken (10) des thermoplastischen Materials mit kontinuierlichen Fasern aufweist.

3. Verfahren zur Herstellung eines Tragkörpers nach einem der Ansprüche 1 und 2, **dadurch gekennzeichnet, dass** es aufweist ein Vorgeben einer Form (12, 13) derart, dass der Querschnitt ihres Formhohlraums eine im wesentlichen konstante Abwicklungslänge (L) über die gesamte Länge des Formhohlraums aufweist, Einlegen einer rechteckförmigen Platte (14) aus einem streckziehbaren thermoplastischen Material mit kontinuierlichen Fasern in die offene Form und Einbringen von formbarem thermoplastischen Material (15) in die Form, um den Tragkörper herzustellen.

4. Tragkörper nach Anspruch 3, **dadurch gekennzeichnet, dass** man eine Form (12, 13) mit positiver Formtrennungsfläche verwendet, dass man das formbare thermoplastische Material (15) in die offene Form eingibt und dass man daraufhin die Form schließt, um die beiden thermoplastischen Materialien (14, 15) zu komprimieren und ein Ausfüllen des Formhohlraums der Form zu bewirken.

5. Verfahren nach Anspruch 4, **dadurch gekennzeichnet, dass** man in dem Bereich des Formhohlraums, der den Überdicken (10) des Tragkörpers (3) entspricht, Plättchen (11) aus streckziehbarem thermoplastischen Material mit kontinuierlichen Fasern zwischen zwei rechteckförmige Platten (14) aus streckziehbarem Thermoplasten einschließt, und dass man das formbare thermoplastische Material (15) auf der einen Seite der rechteckförmigen Platten (14) aufbringt, die den Plättchen (11) gegenüberliegt, bevor die Form geschlossen wird.

## Claims

1. Bumper beam obtained by moulding a mouldable thermoplastic (15) and a drape-mouldable thermoplastic (14) containing continuous fibres which is in sheet form, **characterized in that** the said beam has, in cross section, a developed length which is constant over the entire length of the beam.

2. Beam according to Claim 1, **characterized in that** it has regions (10) of additional thickness made of thermoplastic containing continuous fibres.

3. Process for producing a beam according to either of Claims 1 and 2, **characterized in that** it consists in defining a mould (12, 13) in such a way that the cross section of its cavity has a developed length (L) which is approximately constant over the entire length of the cavity, in placing a rectangular sheet (14) of a drape-mouldable thermoplastic containing continuous fibres in the open mould and in injecting the mouldable thermoplastic (15) into the mould in order to mould the beam.

4. Process according to Claim 3, **characterized in that** a mould (12, 13) with a positive parting line is used and **in that** the mouldable thermoplastic (15) is injected into the open mould and then the mould is closed in order to compress the two thermoplastics (14, 15) and fill the cavity of the mould.

5. Process according to Claim 4, **characterized in that** inserts (11) of drape-mouldable thermoplastic containing continuous fibres are sandwiched between two rectangular sheets (14) of drape-mouldable thermoplastic at those points in the cavity which correspond to the regions (10) of additional thickness of the beam (3) and **in that**, before the mould is closed, the mouldable thermoplastic (15) is deposited on that side of one of the rectangular sheets (14) which is on the opposite side from the inserts (11).
